# EUROPÄISCHE PATENTSCHRIFT

(11) **EP 0 790 465 B1**
(45) Veröffentlichungstag und Bekanntmachung des Hinweises auf die Patenterteilung: **31.10.2001**
(21) Anmeldenummer: 96121009.3
(22) Anmeldetag: 31.12.1996
(51) Int. Cl.: F23N 5/18, G01F 1/40, F23N 5/24

(54) **Einrichtung zur Überwachung eines Heizgerätes**
Monitoring device of a heater
Dispositif de surveillance d'une chaudière

(30) Priorität: 14.02.1996 DE 19605380
(43) Veröffentlichungstag der Anmeldung: 20.08.1997
(73) Patentinhaber: ROBERT BOSCH GMBH, 70442 Stuttgart (DE)
(72) Erfinder: Kehl, Albin, 71272 Renningen (DE); Reicherter, Peter, 73650 Winterbach (DE); Schubert, Joachim, 73240 Wendlingen (DE)

(56) Entgegenhaltungen:
- EP-A- 0 291 583
- EP-A- 0 370 557
- EP-A- 0 733 857
- EP-A- 0 777 109
- DE-A- 3 333 606
- US-A- 2 463 473
- US-A- 4 094 632

## Beschreibung

### Stand der Technik

Die Erfindung betrifft eine Einrichtung, zur Überwachung eines Heizgerätes nach der Gattung des Anspruchs 1. Es sind Heizgeräte (EP 303 559-A2) mit einer Differenzdruck-Meßeinrichtung bekannt, die über mit einer Verbrennungsluft-Zuführung verbundene Druckleitungen den Volumenstrom der Verbrennungsluft bestimmen. Sinkt der Volumenstrom unter einen vorgegebenen Wert, zum Beispiel aufgrund einer Verstopfung der Verbrennungsluft-Zuführung, kann im Sinne eines betriebssicheren Verhaltens das Gasventil des Heizgeräts geschlossen werden. Darüber hinaus verfügen die Heizgeräte der eingangs genannten Art über eine in der Verbrennungsluft-Zuführung oder in einer Abgasabführung angeordnete Strömungsdrossel, die den Strömungswiderstand in der Verbrennungsluft-Zuführung oder in der Abgasabführung so bestimmt, daß bei verschieden langen Abgasabführungen eine optimale Verbrennung mit geringen Schadstoffemissionen und nahezu gleichem Luftüberschuß erfolgt.

Ein Heizgerät mit einer Einrichtung zur Überwachung des durch ein Gebläse geförderten Volumenstroms der Verbrennungsluft mit einer Störmungsdrossel und einem Differenzdrucksensor geht aus der EP 0 291 583 A1 hervor. Hierbei sind der Differenzdrucksensor und die Strömungsdrossel in Strömungsrichtung des Volumenstroms der Verbrennungsluft hintereinander angeordnet.

Aus der EP 0 370 557 A1 ist eine Vorrichtung zur Erfassung des Gasvolumenstroms in einer Rohrleitung bekannt, bei der innerhalb der Rohrleitung eine Strömungsdrossel und parallel zur Rohrleitung neben der Strömungsdrossel ein Differenzdrucksensor angeordnet sind, wobei der Differenzdrucksensor über eine Bypassleitung mit dem Strömungsrohr vor der Strömungsdrossel und hinter der Strömungsdrossel verbunden ist.

Eine Regelvorrichtung, die innerhalb eines vorgegebenen Leistungsbereiches das Mischungsverhältnis von Brennstoff und Verbrennungsluft steuert, wird in der nachveröffentlichten EP 0 733 857 A2 vorgeschlagen. Hierbei ist an der Engstelle einer Venturidüse, in der Verbrennungsluft mit einem Brenngas vermischt wird, ein temperaturempfindliches Stellglied angeordnet, das den Querschnitt der Engstelle variiert, so daß innerhalb eines vorgegebenen Leistungsbereiches des Brenners das Verhältnis von Luftmasse und Gasmasse annähernd gleich bleibt.

Aus der ebenfalls nachveröffentlichten EP 0 777 109 A2 geht eine Vorrichtung zur Bestimmung der Stärke eines Gasvolumenstroms hervor, bei der mit einem Differenzdrucksensor der Druckunterschied zwischen zwei Leitungen gemessen wird. Mit Hilfe einer in einem Rohrstutzen angeordneten Drosselklappe wird dabei der Differenzdruck variiert. Dabei sind im Stutzen Bohrungen ausgebildet, über die der anliegende Druck dem Differenzdrucksensor zugeführt wird.

### Vorteile der Erfindung

Die erfindungsgemäße Einrichtung zur Überwachung des Volumenstromes der Verbrennungsluft und/oder des Abgases mit den kennzeichnenden Merkmalen des Anspruchs 1 hat den Vorteil, dass bei Heizgeräten mit einer in der Verbrennungsluft-Zuführung oder in der Abgasabführung angeordneten Strömungsdrossel der Differenzdruck so angehoben wird, dass dessen Auswertung nicht zu einer frühzeitigen Abschaltung des Heizgerätes führt und damit eine hohe Betriebssicherheit des Heizgerätes gewährleistet ist. Zur präzisen und konstanten Druckerfassung sind die Meßwertaufnehmer in einem in der Verbrennungsluftzuführung und/oder in der Abgasabführung angeordneten Meßrohr untergebracht.

Durch die in den abhängigen Ansprüchen aufgeführten Maßnahmen sind weitere vorteilhafte Ausgestaltungen der Überwachungseinrichtung nach dem Anspruch 1 möglich.

Da bei unterschiedlichen Längen der Verbrennungsluft-Zuführung oder der Abgasabführung der Strömungswiderstand verändert wird, ist es notwendig, den Widerstand der Strömungsdrossel entsprechend zu verändern, um unabhängig von der Verbrennungsluft-Zuführung oder Abgasabführung eine optimale Verbrennung mit konstantem Luftüberschuß zu erzielen. Dies wird in vorteilhafter Weise dadurch erreicht, dass die Strömungsdrossel anhand einer von außen zugänglichen Drehscheibe einstellbar ist. Bei einem Heizgerät mit einer kurzen Abgasabführung bzw. einer kurzen Verbrennungsluft-Zuführung wird die Strömungsdrossel so eingestellt, daß deren Strömungswiderstand sehr groß ist, und umgekehrt.

Eine einfache, funktionell wirksame Ausführung ergibt sich, wenn die Strömungsdrossel über eine mit der Drehscheibe verbundene Welle drehbar gelagert ist.

Bei der erfindungsgemäßen Überwachungseinrichtung ändert sich der durch die beiden Meßwertaufnehmer erfaßte Differenzdruck in Abhängigkeit vom Strömungswiderstand der Strömungsdrossel. Bei einem hohen Strömungswiderstand besteht die Gefahr, daß die Überwachungseinrichtung aufgrund des zu hohen Anstiegs des Differenzdrucks nicht rechtzeitig abschaltet, beispielsweise, wenn durch ein defektes Gebläse oder durch eine Verstopfung der Zuluft- oder Abgaswege kein ausreichender Luftvolumenstrom gefördert wird. In diesen Fällen wird der Differenzdruck durch eine auf den niederdruckseitigen Meßpunkt wirkende Hilfsdrossel im Sinne einer Absenkung des Differenzdrucks korrigiert.

Das Meßrohr ist unmittelbar hinter dem Gebläse in einem Abgaskrümmer angeordnet. Da in diesem Bereich eine Richtungsänderung des Abgasvolumenstroms erfolgt, ist das Meßrohr im wesentlichen rechtwinklig ausgebildet und somit der Strömungsänderung angepaßt.

Bei der Anordnung der Meßwertaufnehmer im Meßrohr wirkt die Hilfsdrossel in vorteilhafter Weise auf das niederdruckseitige Ende des Meßrohres. Die Strömungsdrossel und die Hilfsdrossel sind über die Drehscheibe gemeinsam verstellbar, derart, daß mit einer zunehmenden Drosselung des Volumenstromes durch die Strömungsdrossel die Öffnung des niederdruckseitigen Endes des Meßrohres durch die Hilfsdrossel zunehmend abgedeckt wird. Dadurch wird trotz unterschiedlicher Stellungen der Strömungsdrossel in der Verbrennungsluft-Zuführung oder in der Abgasabführung die erfindungsgemäße Differenzdruckerhöhung im wesentlichen konstant gehalten.

Sind die Meßwertaufnehmer im Meßrohr angebracht, führt eine Anordnung der Strömungsdrossel im gesamten Bereich zwischen den beiden Enden des Meßrohres zu einer Differenzdruckerhöhung.

Sind die Meßwertaufnehmer ohne Meßrohr direkt in der Verbrennungsluft-Zuführung oder in der Abgasabführung angeordnet, so führt eine Anordnung der Strömungsdrossel im Bereich zwischen den beiden Meßwertaufnehmern zu einer Differenzdruckerhöhung.

### Zeichnung

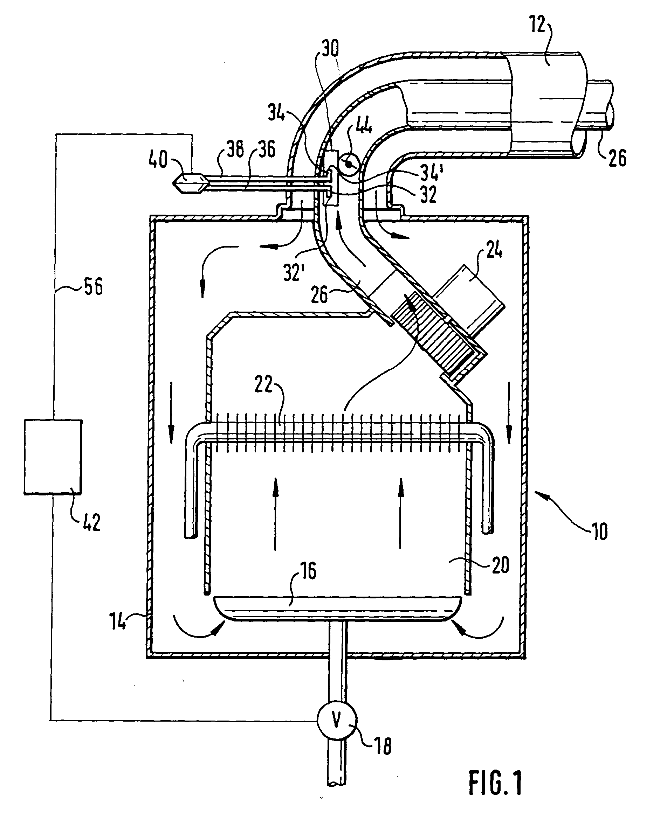

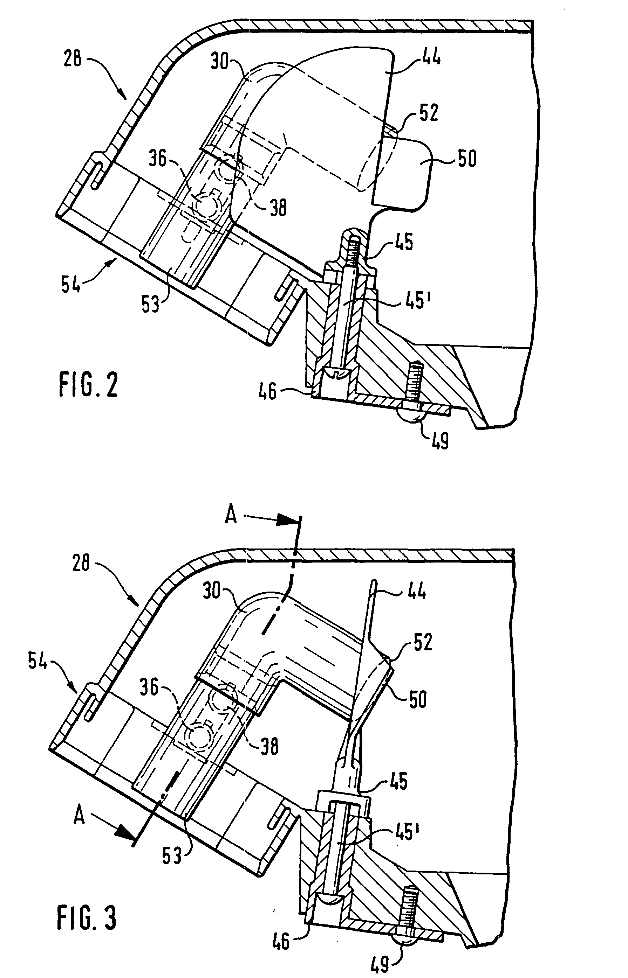

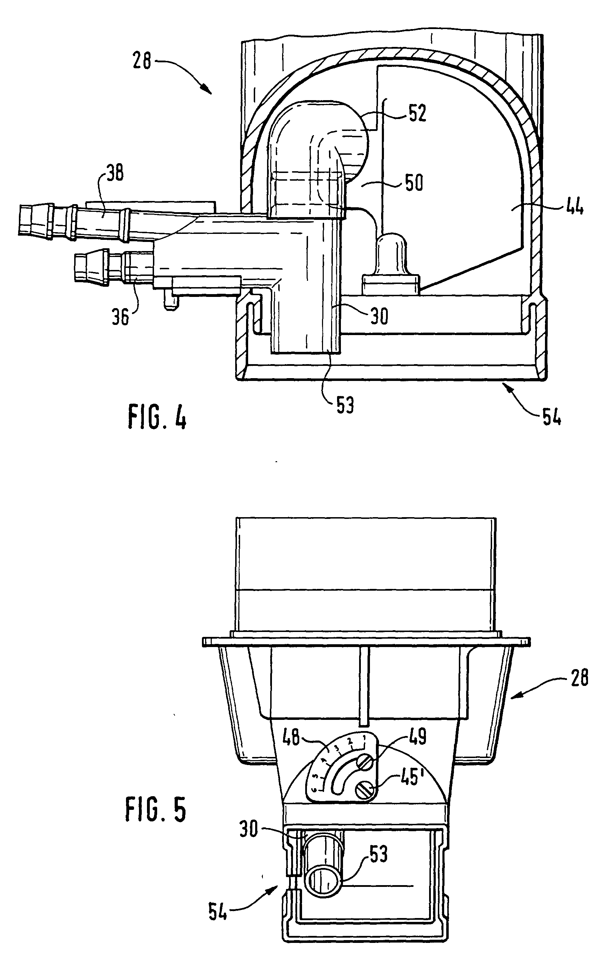

In der Zeichnung ist ein Ausführungsbeispiel der erfindungsgemäßen Überwachungseinrichtung dargestellt und in der nachfolgenden Beschreibung näher erläutert. Es zeigen Figur 1 ein schematisch dargestelltes Heizgerät, Figur 2 und 3 Längsschnitte eines Abgaskrümmers, Figur 4 einen Schnitt nach Linie A-A gemäß Figur 3 und Figur 5 eine Frontansicht des Abgaskrümmers.

### Beschreibung

In Figur 1 ist schematisch ein sogenanntes raumluftunabhängiges bzw. Außenwand-Heizgerät 10 dargestellt, das die Verbrennungsluft über eine Zuführung 12 von außen bezieht. Das Heizgerät 10 weist ein zur Umgebung gasdicht abgeschlossenes Gehäuse 14 auf, das mit der Verbrennungsluft-Zuführung 12 verbunden ist. Im Inneren des Gehäuses 14 ist ein Brenner 16 angeordnet, der einerseits über ein Gasregelventil 18 mit Brenngas, und andererseits über die Zuführung 12 mit Verbrennungsluft versorgt wird. Die bei der Verbrennung entstehenden Verbrennungsgase beaufschlagen einen innerhalb einer Verbrennungskammer 20 angeordneten Wärmeübertrager 22 für ein zu erhitzendes Medium. Oberhalb des Wärmeübertragers 22 werden die Abgase durch ein abgasseitig angeordnetes Gebläse 24 und einer Abgasabführung, im folgenden als Abgasrohr 26 bezeichnet, nach außen gefördert, wobei die Verbrennungsluft-Zuführung 12 koaxial zum Abgasrohr 26 geführt ist. In einem Abgaskrümmer 28 des Abgasrohres 26 sind zwei von einem Meßrohr 30 umgebene Meßwertaufnehmer 32, 34 an zwei Meßpunkten 32', 34' angeordnet, die über Meßleitungen 36, 38 mit zwei Kammern einer Druckmeßdose 40 verbunden sind. Die Kammern der Druckmeßdose 40 sind durch eine Membran getrennt, darüberhinaus ist die Druckmeßdose 40 über eine Signalleitung 56 mit einem Steuergerät 42 verbunden.

Im Abgaskrümmer 28 ist weiterhin eine Strömungsdrossel 44 angeordnet, die den Strömungswiderstand im Abgasrohr 26 so beeinflußt, daß eine optimale Verbrennung mit konstantem Luftüberschuß erfolgt. Die Strömungsdrossel 44 ist im Abgaskrümmer 28 seitlich neben dem Meßrohr 30 angeordnet, wobei die beiden Differenzdruck-Meßpunkte 32', 34' in Strömungsrichtung des Abgasvolumenstroms vor der Strömungsdrossel 44 angeordnet sind. Über eine im Abgaskrümmer 28 drehbar gelagerte und durch Befestigungselemente 45, 45' fixierte Welle 46, an deren einem Ende eine außerhalb des Abgaskrümmers 28 angeordnete Drehscheibe 48 befestigt ist, läßt sich die Strömungsdrossel 44 im Abgaskrümmer 28 verstellen. Damit kann der Strömungswiderstand im Abgasrohr 26 entsprechend unterschiedlichen Abgasrohrlängen und/oder unterschiedlichen Längen der Verbrennungsluft-Zuführung 12 so angepaßt werden, daß der Verbrennungsluft-Volumenstrom einen Wert annimmt, bei dem die Verbrennung optimal und mit konstantem Luftüberschuß erfolgt. Die flügelartig ausgebildete Strömungsdrossel 44 kann mit Hilfe einer auf der Drehscheibe 48 angebrachten Skala zwischen den Positionen "offen" (Figur 2) und "geschlossen" (Figur 3) verstellt werden. Zwischen diesen beiden Positionen sind entsprechende Zwischenstellungen möglich. Eine Stellschraube 49 ermöglicht dabei eine Arretierung der Drehscheibe 48 und damit der Strömungsdrossel 44. Ist die Strömungsdrossel 44 in der Position "geschlossen", zum Beispiel bei Verwendung eines kurzen Abgasrohres 26, deckt die Fläche der Strömungsdrossel 44 ca. die Hälfte des Innendurchmessers des Abgaskrümmers 28 ab. In Abhängigkeit von der Länge des Abgasrohres 26 und der Verbrennungsluft-Zuführung 12 wird vor der Erstinbetriebnahme des Heizgeräts 10 durch den Monteur die Strömungsdrossel 44 und damit der Strömungswiderstand im Abgasrohr 26 über die Drehscheibe 48 eingestellt.

Eine aus der Strömungsdrossel 44 zusätzlich gebildete Hilfsdrossel 50 deckt in Abhängigkeit von der Stellung der Strömungsdrossel 44 im Abgaskrümmer 28 ein Ende 52 des Meßrohres 30 mehr oder weniger ab. Ist die Strömungsdrossel 44 in der Stellung "geschlossen" (Fig. 3 und 4), so deckt die Fläche der Hilfsdrossel 50 ca. die Hälfte des Querschnitts des Meßrohres 30 ab. Das Meßrohr 30 ist innerhalb des Abgaskrümmers 28 angeordnet, der über einen Anschlußstutzen 54 mit dem Gebläse 24 verbunden ist. Das Meßrohr 30 ist rechtwinklig ausgebildet, womit es im wesentlichen der durch den Abgaskrümmer 28 hervorgerufenen Richtungsänderung des Abgasrohres 26 folgt. Wie aus Figur 2 und 3 ersichtlich, ist die Strömungsdrossel 44, in Strömungsrichtung des Abgasvolumenstromes gesehen, am hinteren Ende des Meßrohres 30, vor der Öffnung des Endes 52 des Meßrohres 30 angeordnet.

Die Überwachungseinrichtung funktioniert auf folgende Art und Weise:

Bei der Inbetriebnahme des Heizgerätes, zum Beispiel durch eine anstehende Wärmeanforderung, wird als erstes das Gebläse 24 eingeschaltet. Aufgrund des durch das Gebläse 24 geförderten Abgasvolumenstroms wird durch die beiden Meßwertaufnehmer 32, 34 ein Differenzdruck erfaßt, der bei einem vorgegebenen bzw. voreingestellten Wert (ca. 0,6 mbar) die in der Druckmeßdose 40 angeordnete Membran so weit auslenkt, daß in der Druckmeßdose 40 angeordnete Kontakte geschlossen werden und über die Signalleitung 56 und das Steuergerät 42 das Gasregelventil 18 geöffnet wird. Dabei wird gleichzeitig die Zündung aktiviert. Der Meßwertaufnehmer 32 erfaßt u.a. den durch den Abgasvolumenstrom entstehenden dynamischen Druck, auch Staudruck genannt, während der dem Abgasvolumenstrom abgewandte Meßwertaufnehmer 34 den im wesentlichen unabhängig vom Abgasvolumenstrom gleichbleibenden statischen Druck erfaßt. Am Meßwertaufnehmer 32 wird ein höherer Druck erfaßt, als am Meßwertaufnehmer 34. Während des Betriebs des Heizgerätes 10 wird über die Druckmeßdose 40 ständig der Abgasvolumenstrom bzw. der Verbrennungsluft-Volumenstrom überwacht; setzen sich die Verbrennungsluft-Zuführung 12 oder das Abgasrohr 26 zu oder ist das Gebläse 14 defekt, fällt die Druckdifferenz ab und über das Steuergerät 42 wird das Gasregelventil 18 geschlossen und das Heizgerät 10 abgeschaltet.

Untersuchungen haben gezeigt, daß der Differenzdruck in Abhängigkeit von der Lage der Strömungsdrossel 44 im Abgasrohr 26 abnimmt, wobei die Gefahr besteht, daß das Heizgerät 10 trotz eines ordnungsgemäßen Betriebs zu früh abschältet.

Durch die Anordnung der Strömungsdrossel 44 im Abgaskrümmer 28 wird der Strömungsquerschnitt an dieser Stelle reduziert. Ein Teil des Abgasvolumenstroms wird dabei durch das seitlich zur Strömungsdrossel 44 versetzt angeordnete Meßrohr 30 mit einer höheren Strömungsgeschwindigkeit geleitet. Damit wird der am Meßwertaufnehmer 32 erfaßte Staudruck (dynamischer Druck) vergrößert, während der Druck am Meßwertaufnehmer 34 im wesentlichen konstant bleibt, da die Strömungsdrossel 44 in Strömungsrichtung vor dem Ende 52 des Meßrohres 30 angeordnet ist. Als Ergebnis steht ein höherer Differenzdruck zur Verfügung, der ein zu frühes Abschalten durch die Überwachungseinrichtung verhindert.

Damit die Differenzdruck-Erhöhung unabhängig von der Stellung der Strömungsdrossel 44 und damit vom Strömungswiderstand konstant bleibt, wird der durch den Meßwertaufnehmer 34 erfaßte Druck mit Hilfe der auf die Öffnung des Endes 52 des Meßrohres 30 wirkenden Hilfsdrossel 50 in Abhängigkeit von der Stellung der Strömungsdrossel angehoben.

## Patentansprüche

1. Einrichtung zur Überwachung des durch ein Gebläse geförderten Volumenstromes der Verbrennungsluft und/oder des Abgases eines Heizgerätes, mit mindestens zwei mit Meßwertaufnehmern (32, 34) ausgebildeten Meßpunkten (32', 34') in einer Verbrennungsluftzuführung (12) und/oder in einer Abgasabführung (26), die einen Differenzdruck zur Bestimmung des Volumenstromes der Verbrennungsluft oder des Abgases erfassen, und mit einer in der Verbrennungsluftzuführung (12) und/oder in der Abgasabführung (26) angeordneten Strömungsdrossel (44) zur Einstellung einer optimalen Verbrennung bei verschieden langen Verbrennungsluftzuführungen (12) und/oder Abgasabführungen (26), **dadurch gekennzeichnet, dass** die Meßwertaufnehmer (32, 34) in einem in der Verbrennungsluftzuführung (12) und/oder in der Abgasabführung (26) angeordneten Meßrohr (30) positioniert sind, dass die Strömungsdrossel (44) und das Meßrohr (30) im wesentlichen seitlich nebeneinander angeordnet sind und dass der stromaufwärts gelegene, dem Volumenstrom entgegengerichtete erste Meßwertaufnehmer (32) in Strömungsrichtung vor der Strömungsdrossel (44) angeordnet ist, wodurch sich der zwischen den beiden Meßpunkten (32', 34') wirksame Differenzdruck erhöht.

2. Einrichtung nach Anspruch 1, **dadurch gekennzeichnet, daß** die Strömungsdrossel (44) mittels einer außerhalb der Verbrennungsluftzuführung (12) oder der Abgasabführung (26) angeordneten Drehscheibe (48) einstellbar ist.

3. Einrichtung nach einem der vorhergehenden Ansprüche, **dadurch gekennzeichnet, daß** die Strömungsdrossel (44) drehbar gelagert und über eine mit der Drehscheibe (48) verbundene Welle (46) verstellbar ist.

4. Einrichtung nach einem der vorhergehenden Ansprüche, **gekennzeichnet durch** eine zusätzliche, auf den niederdruckseitigen Meßpunkt (34') wirkende Hilfdrossel (50).

5. Einrichtung nach Anspruch 1, **dadurch gekennzeichnet, daß** das Meßrohr (30) rechtwinklig ausgebildet ist und in einem Abgaskrümmer (28) der Abgasabführung (26) hinter dem Gebläse (14) angeordnet ist.

6. Einrichtung nach Anspruch 4, **dadurch gekennzeichnet, daß** die Hilfsdrossel (50) auf das niederdruckseitige Ende (52) des Meßrohres (30) wirkt.

7. Einrichtung nach Anspruch 4, **dadurch gekennzeichnet, daß** die Hilfsdrossel (50) maximal die Hälfte des Querschnitts des Meßrohres (30) abdeckt.

8. Einrichtung nach einem der Ansprüche 4 bis 7, **dadurch gekennzeichnet, daß** die Hilfsdrossel (50) gemeinsam mit der Strömungsdrossel (44) verstellbar ist.

9. Einrichtung nach Anspruch 1, **dadurch gekennzeichnet, daß** die Strömungsdrossel (44) im Bereich zwischen den beiden Enden (52, 53) des Meßrohres (30) angeordnet ist.

10. Einrichtung nach Anspruch 1, **dadurch gekennzeichnet, daß** die Strömungsdrossel (44) im Bereich zwischen den beiden Meßpunkten (32', 34') angeordnet ist.

11. Einrichtung nach einem der vorhergehenden Ansprüche, **dadurch gekennzeichnet, daß** das Verhältnis der Querschnitte der Abgasabführung (26) und der Strömungsdrossel (44) circa 4:2 bis 4:3 beträgt.

## Claims

1. Device for monitoring the volume flow of the combustion air and/or of the exhaust gas of a heater which are conveyed by a blower, having at least two measuring points (32', 34') which are formed with measured value pick-ups (32, 34) in a combustion air feed line (12) and/or in an exhaust gas discharge line (26), which measuring points (32', 34') send a differential pressure in order to determine the volume flow of the combustion air or of the exhaust gas, and having a flow throttle (44), arranged in the combustion air feed line (12) and/or in the exhaust gas discharge line (26), for setting optimum combustion with combustion air feed lines (12) and/or exhaust gas discharge lines (26) of different lengths, **characterized in that** the measured value pick-ups (32, 34) are positioned in a measuring tube (30) which is arranged in the combustion air feed line (12) and/or in the exhaust gas discharge line (26), **in that** the flow throttles (44) and the measuring tube (30) are arranged essentially laterally one next to the other, and **in that** the first measured value pick-up (32) positioned upstream, which is directed counter to the volume flow, is arranged upstream of the flow throttle (44) in the direction of flow, as a result of which the differential pressure acting between the two measuring points (32', 34') increases.

2. Device according to Claim 1, **characterized in that** the flow throttle (44) can be set by means of a rotary disc (48) arranged outside the combustion air feed line (12) or the exhaust gas discharge line (26).

3. Device according to one of the preceding claims, **characterized in that** the flow throttle (44) is rotatably mounted and can be adjusted by means of a shaft (46) which is connected to the rotary disc (48).

4. Device according to one of the preceding claims, **characterized by** an additional auxiliary throttle (50) which acts on the low-pressure-end measuring point (34').

5. Device according to Claim 1, **characterized in that** the measuring tube (30) is embodied at right angles and is arranged in an exhaust gas manifold (28) of the exhaust gas discharge line (26) downstream of the blower (14).

6. Device according to Claim 4, **characterized in that** the auxiliary throttle (50) acts on the low-pressure end (52) of the measuring tube (30).

7. Device according to Claim 4, **characterized in that** the auxiliary throttle (50) covers at maximum half of the cross section of the measuring tube (30).

8. Device according to one of Claims 4 to 7, **characterized in that** the auxiliary throttle (50) can be adjusted together with the flow throttle (44).

9. Device according to Claim 1, **characterized in that** the flow throttle (44) is arranged in the region between the two ends (52, 53) of the measuring tube (30).

10. Device according to Claim 1, **characterized in that** the flow throttle (44) is arranged in the region between the two measuring points (32', 34').

11. Device according to one of the preceding claims, **characterized in that** the ratio of the cross sections of the exhaust gas discharge line (26) and of the flow throttle (44) is approximately 4:2 to 4:3.

## Revendications

1. Dispositif de surveillance du courant volumique d'air de combustion refoulé par un ventilateur et/ou des gaz brûlés d'une chaudière, comprenant,
- dans une amenée (12) d'air de combustion et/ou dans une conduite (26) de sortie des gaz brûlés, au moins deux points de mesure (32', 34') sous la forme de transmetteurs de valeurs à mesurer (32, 34) qui saisissent une différence de pressions pour déterminer le courant volumique de l'air de combustion ou des gaz brûlés,
- dans la conduite (12) d'amenée de l'air de combustion et/ou dans la conduite (26) des gaz brûlés, un étrangleur d'écoulement (44) pour régler une combustion optimale en présence de différentes longueurs d'amenée (12) d'air de combustion et/ou de sorties (26) des gaz brûlés,
**caractérisé en ce que**
- les transmetteurs (32, 34) sont positionnés dans un tube de mesure (30) monté dans l'amenée (12) de l'air de combustion et/ou dans la sortie (26) des gaz brûlés,
- l'étrangleur d'écoulement (44) et le tube de mesure (30) sont disposés essentiellement latéralement l'un près de l'autre, et
- le premier transmetteur (32) situé en amont et orienté face au courant volumique se trouve, par rapport au sens d'écoulement, devant l'étrangleur d'écoulement (44), de sorte que la différence de pression réelle entre les deux points de mesure (32', 34') est augmentëe.

2. Dispositif selon la revendication 1,
**caractérisé en ce que**
l'étrangleur d'écoulement (44) peut être réglé par l'intermédiaire d'un disque rotatif (48) disposé à l'extérieur de l'amenée (12) d'air de combustion ou de la sortie (26) des gaz brûlés.

3. Dispositif selon l'une quelconque des revendications précédentes,
**caractérisé en ce que**
l'étrangleur d'écoulement (44) est monté tournant et peut être déplacé par un arbre (46) relié au disque rotatif (48).

4. Dispositif selon l'une quelconque des revendications précédentes,
**caractérisé en ce qu'**
il comporte un étranglement auxiliaire (50) agissant sur le point de mesure (34') situé du côté basse pression.

5. Dispositif selon la revendication 1,
**caractérisé en ce que**
le tube de mesure (30) est coudé à angle droit et monté dans un coude (28) de la sortie des gaz brûlés (26) en aval du ventilateur (14).

6. Dispositif selon la revendication 4,
**caractérisé en ce que**
l'étrangleur auxiliaire (50) agit sur l'extrémité (52) du tube de mesure (30) située du côté basse pression.

7. Dispositif selon la revendication 4,
**caractérisé en ce que**
l'étrangleur auxiliaire (50) recouvre au plus la moitié de la section du tube de mesure (30).

8. Dispositif selon l'une quelconque des revendications 4 à 7,
**caractérisé en ce que**
l'étrangleur auxiliaire (50) peut se déplacer en commun avec l'étrangleur d'écoulement (44).

9. Dispositif selon la revendication 1,
**caractérisé en ce que**
l'étrangleur d'écoulement (44) est monté dans la zone située entre les deux extrémités (52, 53) du tube de mesure (30).

10. Dispositif selon la revendication 1,
**caractérisé en ce que**
l'étrangleur d'écoulement (44) est monté dans la zone située entre les deux points de mesure (32', 34').

11. Dispositif selon l'une quelconque des revendications précédentes,
**caractérisé en ce que**
le rapport de la section de la sortie des gaz brûlés (26) à la surface de l'étrangleur d'écoulement (44) va de 4 : 2 à 4 : 3.
